# EUROPEAN PATENT APPLICATION

(11) **EP 2 950 565 A1**
(43) Date of publication of application: **02.12.2015**
(21) Application number: 14742817.1
(22) Date of filing: 21.01.2014
(51) Int. Cl.: H04W 4/20, H04W 68/00, H04W 76/02, H04W 76/04

(54) **USER DEVICE, GATEWAY DEVICE, WIRELESS BASE STATION, MOBILE COMMUNICATION SYSTEM, AND MOBILE COMMUNICATION METHOD**

(30) Priority: 24.01.2013 JP 2013011533
(71) Applicant: NTT DOCOMO, INC., Chiyoda-ku Tokyo 100-6150 (JP)
(72) Inventor: KOSHIMIZU, Takashi, Tokyo 100-6150 (JP); ALI, Irfan, Istanbul (TR)
(74) Representative: Hoffmann Eitle
(86) International application number: PCT/JP2014/051079
(87) International publication number: WO 2014/115711

(57) **Abstract**

Provided are a user device, a gateway device, a radio base station, a mobile communication system, and a mobile communication method capable of considerably reducing the number of control signals necessary for Small Data Transmission (SDT). A UE 100 transitions from RRC-IDLE state where no communication bearer in the control plane is established and EMM-IDLE state where communication in the user plane is not enabled to RRC-CONNECTED state where a communication bearer in the control plane is established and the EMM-IDLE state. The UE 100 transmits user data inputted into the UE 100, via the communication bearer in the control plane in the RRC-CONNECTED state and the EMM-IDLE state. In addition, the UE 100 transitions from the RRC-CONNECTED state and the EMM-IDLE state to the RRC-IDLE state and the EMM-IDLE state as soon as the transmission of the user data is completed.

## Description

### TECHNICAL FIELD

The present invention relates to a user device, a gateway device, a radio base station, and a mobile communication system that perform Small Data Transmission (SDT), and a mobile communication method using the same.

### BACKGROUND ART

Lately, 3rd Generation Partnership Project (3GPP) has been discussing Machine Type Communication (MTC) in which a user device (UE) connected to equipment such as an automatic vending machine or various sensors. The UE transmits data outputted from the equipment, via a radio access network such as Long Term Evolution (LTE) (Non-patent Document 1, for example).

The data outputted from such equipment has smaller size (about 500 bytes, for example) than user data usually transmitted from the UE. In 3GPP, transmission of such small-size data is called Small Data Transmission (SDT).

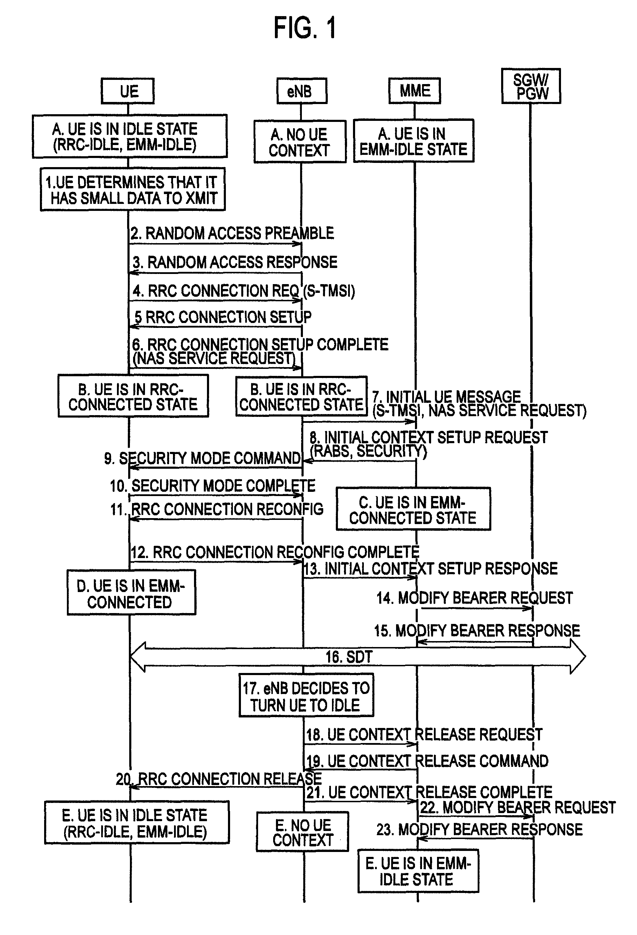

Fig. 1 illustrates an SDT sequence based on a conventional communication procedure. As illustrated in Fig. 1, a UE recognizes that the UE has to transmit small data transmission in IDLE state, specifically, in RRC-IDLE state where no Radio Resource Control (RRC) connection is established and EMM-IDLE state where the UE's mobility management (EMM) is not ready, and establishes an RRC communication bearer with a radio base station (eNB) (Steps 1 to 6 in Fig. 1). As a result, the UE transitions to RRC-CONNECTED state where an RRC connection is established (and EMM-IDLE state).

The UE also performs processes such as security-related processes (Steps 7 to 12 in Fig. 1) and establishment of a communication bearer between the eNB and a Serving Gateway (SGW) or a PDN Gateway (PGW) (Steps 13 to 15 in Fig. 1), and thereby transitions to EMM-CONNECTED state where the UE's mobility management (MM) is enabled and transmission/reception of user data in the user plane is enabled.

The UE performs SDT in RRC-CONNECTED state and EMM-CONNECTED state (Step 16 in Fig. 1), and transitions back to RRC-IDLE state and EMM-IDLE state once the SDT is completed (state E in Fig. 1).

### PRIOR ART DOCUMENT

### NON-PATENT DOCUMENT

Non-patent Document 1: 3GPP TR 23.887 V0.6.0: Machine-Type and other Mobile Data Applications Communications Enhancements (Release 12), 3GPP, December 2012

### SUMMARY OF THE INVENTION

However, the SDT based on the conventional communication procedure described above has the following problem. Specifically, even for transmitting small data of about 500 bytes, a large number of control signals are transmitted and received between the UE and the eNB and between the eNB and a Mobility Management Entity (MME), and therefore the efficiency is extremely poor and network resources are not used effectively.

The present invention has been therefore made in view of the above circumstances, and an objective thereof is to provide a user device, a gateway device, a radio base station, a mobile communication system, and a mobile communication method capable of considerably reducing the number of control signals necessary for Small Data Transmission (SDT).

A first feature of the present invention is summarized as a user device including: a radio resource control unit configured to perform a process in a control plane according to radio resource control; and a mobility management unit configured to perform mobility management of the user device and enable a process in a user plane, the user device including: a state control unit configured to cause the user device to transition from RRC-IDLE state where no communication bearer in the control plane is established, and EMM-IDLE state where communication in the user plane is not enabled, to RRC-CONNECTED state where a communication bearer in the control plane is established and the EMM-IDLE state; and a data transmission unit configured to transmit user data inputted into the user device, via the communication bearer in the control plane in the RRC-CONNECTED state and the EMM-IDLE state. Here, the state control unit causes the user device to transition from the RRC-CONNECTED state and the EMM-IDLE state to the RRC-IDLE state and the EMM-IDLE state as soon as the transmission of the user data by the data transmission unit is completed.

A second feature of the present invention is summarized as a gateway device including a packet processing unit configured to receive a packet from a radio base station with which a user device establishes a communication bearer according to radio resource control, the packet including an identifier for identifying the communication bearer, and to send a mobility management device a message in response to the received packet, the message indicating a reception acknowledgement of the packet and indicating that the user device is enabled to perform communication in a user plane.

A third feature of the present invention is summarized as a radio base station including: a page request reception unit configured to receive a page request for a user device from a gateway device connected to an external communication network; and a NAS connection establishment unit configured to perform a non-access stratum service request to the user device in response to the page request received by the page request reception unit.

A fourth feature of the present invention is summarized as a mobile communication system including: a user device which includes a radio resource control unit configured to perform a process in a control plane according to radio resource control, and a mobility management unit configured to perform mobility management of the user device and enable a process in a user plane; and a gateway device connected to an external communication network. Here, the user device includes: a state control unit configured to cause the user device to transition from RRC-IDLE state where no communication bearer in the control plane is established, and EMM-IDLE state where communication in the user plane is not enabled, to RRC-CONNECTED state where a communication bearer in the control plane is established, and the EMM-IDLE state; and a data transmission unit configured to transmit user data inputted into the user device, via the communication bearer in the control plane in the RRC-CONNECTED state and the EMM-IDLE state, the state control unit causes the user device to transition from the RRC-CONNECTED state and the EMM-IDLE state to the RRC-IDLE state and the EMM-IDLE state as soon as the transmission of the user data by the data transmission unit is completed, and transmits a packet via the communication bearer in the control plane to the radio base station with which the communication bearer is established, the packet being for establishing a communication bearer between the radio base station and the gateway device, and the gateway device includes a packet processing unit configured to receive a packet from the radio base station, the packet including an identifier for identifying the communication bearer, and to send a mobility management device a message in response to the received packet, the message indicating a reception acknowledgment of the packet and indicating that the user device is enabled to perform communication in the user plane.

A fifth feature of the present invention is summarized as a mobile communication method using: a user device which includes a radio resource control unit configured to perform a process in a control plane according to radio resource control, and a mobility management unit configured to perform mobility management of the user device and enable a process in a user plane; and a gateway device connected to an external communication network, the method including the steps of: causing the user device to transition from RRC-IDLE state where no communication bearer in the control plane is established, and EMM-IDLE state where communication in the user plane is not enabled, to RRC-CONNECTED state where a communication bearer in the control plane is established, and the EMM-IDLE state; causing the user device to transmit user data inputted into the user device, via the communication bearer in the control plane in the RRC-CONNECTED state and the EMM-IDLE state; causing the user device to transmit a packet via the communication bearer in the control plane to the radio base station with which the communication bearer is established, the packet being for establishing a communication bearer between the radio base station and the gateway device; causing the gateway device to receive a packet from the radio base station, the packet including an identifier for identifying the communication bearer, and to send a mobility management device a message in response to the received packet, the message indicating a reception acknowledgment of the packet and indicating that the user device is enabled to perform communication in the user plane; and causing the user device to transition from the RRC-CONNECTED state and the EMM-IDLE state to the RRC-IDLE state and the EMM-IDLE state as soon as the transmission of the user data inputted into the user device is completed.

### BRIEF DESCRIPTION OF THE DRAWINGS

[Fig. 1] Fig. 1 is a diagram illustrating an SDT sequence based on a conventional communication procedure.
[Fig. 2] Fig. 2 is an overall schematic configuration diagram of a mobile communication system 1 according to an embodiment of the present invention.
[Fig. 3] Fig. 3 is a functional block configuration diagram of a UE 100 according to the embodiment of the present invention.
[Fig. 4] Fig. 4 is a diagram illustrating a state transition of the UE 100 and a network according to the embodiment of the present invention.
[Fig. 5] Fig. 5 is a functional block configuration diagram of an SGW 40 according to the embodiment of the present invention.
[Fig. 6] Fig. 6 is a functional block configuration diagram of an eNB 20 according to the embodiment of the present invention.
[Fig. 7] Fig. 7 is a diagram illustrating a sequence in the mobile communication system 1 observed when the UE 100 according to the embodiment of the present invention performs SDT voluntarily.
[Fig. 8] Fig. 8 is a diagram illustrating a sequence in the mobile communication system 1 observed when there is an incoming call for the UE 100 while the UE performs SDT according to the embodiment of the present invention.
[Fig. 9] Fig. 9 is a diagram illustrating a sequence in the mobile communication system 1 observed when the network (gateway device) according to the embodiment of the present invention directs the UE 100 to perform SDT.

### MODE FOR CARRYING OUT THE INVENTION

Next, an embodiment of the present invention will be described. Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### (1) Overall Schematic Configuration of Mobile Communication System

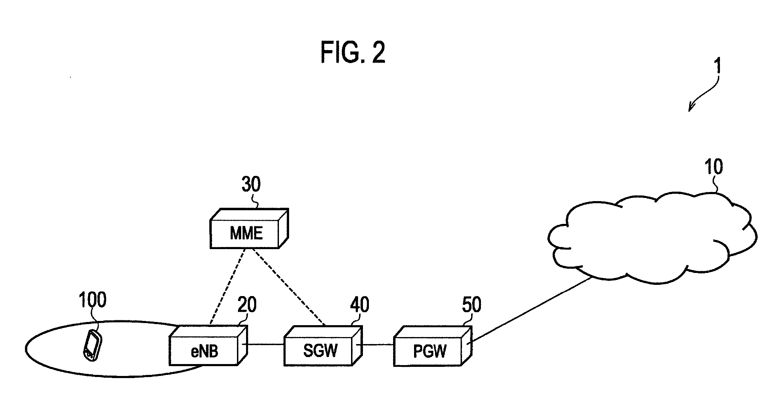

Fig. 2 is an overall schematic configuration diagram of a mobile communication system 1 according to an embodiment. As illustrate in Fig. 2, the mobile communication system 1 includes a communication network 10, a radio base station 20 (hereinafter eNB 20), a Mobility Management Entity 30 (hereinafter MME 30), a Serving Gateway 40 (hereinafter SGW 40), a Packet Data Network Gateway 50 (hereinafter PGW 50), and a user device (hereinafter UE 100).

The communication network 10 is connected to the PGW 50. The communication network 10 is an IP-based wired/wireless Packet Data Network (PDN). The communication network 10 may include a public communication network such as the Internet and a dedicated communication network provided by a telecommunications carrier.

The eNB 20 is a radio base station compliant with the specification defined by 3rd Generation Partnership Project (3GPP). Specifically, the eNB 20 is a radio base station compliant with the specification of Long Term Evolution (LTE).

The MME 30 is connected to the eNB 20 and the SGW 40, and configured to handle mobility management of the UE 100, for example. The SGW 40 achieves connection in the user plane and provides user data (packet) routing/transfer functions. The PGW 50 is a connection point between the UE 100 and the communication network 10, and provides a function of transferring user data (packet) between the UE 100 and the communication network 10.

The UE 100 is a user device (radio terminal) compliant with the specification of LTE, and is configured to communicate with the eNB 20 by radio. In this embodiment, in particular, the UE 100 aims not to provide communications for an ordinary person to call but mainly to provide machine-to-machine communications, i.e., communications with equipment such as an automatic vending machine, a measurement device, an industrial machine, or various sensors. The UE 100 is configured to perform Small Data Transmission (SDT) in which small-size data (about 500 bytes) outputted from the equipment is transmitted to, for example, a communication counterpart server (not illustrated) via the eNB 20.

### (2) Functional Block Configuration of Mobile Communication System

Next, a functional block configuration of the mobile communication system 1 is described. Specifically, description is given of functional block configurations of the user device (UE 100), the gateway device (SGW 40), and the radio base station (eNB 20). It should be noted that what is described here is only about functional block configurations related to the present invention.

### (2.1) User Device

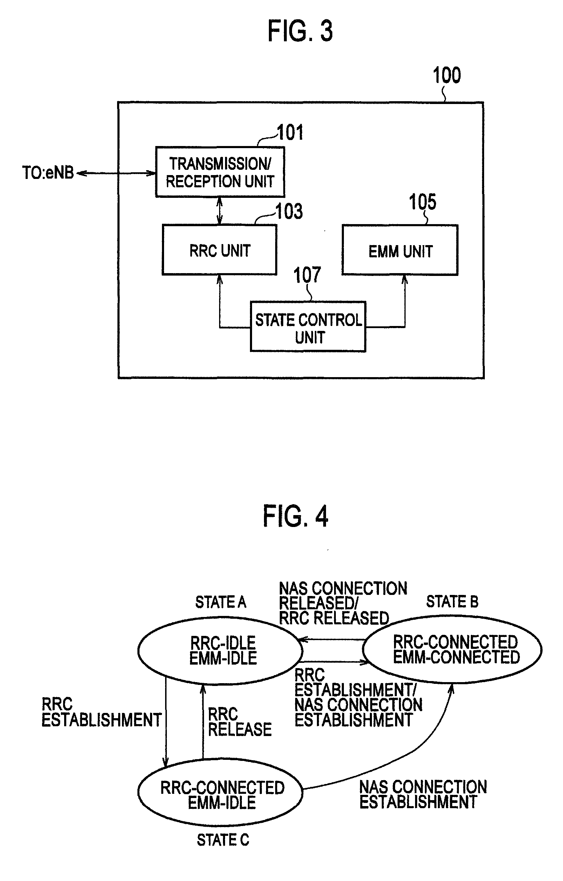

Fig. 3 is a functional block configuration diagram of the UE 100. As illustrated in Fig. 3, the UE 100 includes a transmission/reception unit 101, an RRC unit 103, an EMM unit 105, and a state control unit 107.

The transmission/reception unit 103 is configured to transmit/receive data on an application implemented in the UE 100 (user data and control data) to/from a communication counterpart server and the like, and to transmit data inputted in the UE 100 (user data) to the communication counterpart server and the like.

As described above, the UE 100 is connected to equipment such as an automatic vending machine, a measurement device, an industrial machine, or various sensors, and the transmission/reception unit 101 transmits (SDT) small-size data outputted from the equipment, to the server and the like. Specifically, when the UE 100 is in RRC-CONNECTED state and EMM-IDLE state, the transmission/reception unit 101 transmits user data inputted into the UE 100, via a communication bearer in the control plane. In this embodiment, the transmission/reception unit 101 constitutes a data transmission unit.

The RRC unit 103 (radio resource control unit) is configured to perform processes in the control plane according to Radio Resource Control (RRC). Specifically, the RRC unit 103 establishes/releases connection in the RRC layer according to RRC. In this embodiment, in particular, RRC_Connected SDT state is newly provided in which small-size data outputted from the equipment connected to the UE 100 can be transmitted via a communication bearer in the control plane. When transmitting small-size data, the UE 100 transitions to RRC_Connected SDT state and performs SDT transmission.

The EMM unit 105 (mobility management unit) is configured to perform mobility management (Enhanced Mobility Management) according to LTE of the user device (UE 100) that the EMM unit belongs to. In addition, by performing mobility management, the EMM unit 105 establishes security of the UE 100, and enables processes in the user plane, more specifically, communications via a communication bearer in the user plane.

The state control unit 107 is configured to control states of the RRC unit 103 and the EMM unit 105. Specifically, the state control unit 107 controls the state of the RRC unit 103 in either RRC-IDLE state where no communication bearer in the control plane is established or RRC-CONNECTED state where a communication bearer in the control plane is established. In addition, the state control unit 107 controls the state of the EMM unit 105 in either EMM-IDLE state where communications in the user plane are not enabled or EMM-CONNECTED state where communications in the user plane are enabled.

Fig. 4 is a diagram illustrating transition among the above-mentioned four states (RRC-IDLE state, RRC-CONNECTED state, EMM-IDLE state, and EMM-CONNECTED state) of the UE 100. As illustrated in Fig. 4, there are combination states based on the combination of the four states described above, i.e., RRC-IDLE state and EMM-IDLE state (state A), RRC-CONNECTED state and EMM-CONNECTED state (state B), and RRC-CONNECTED state and EMM-IDLE state (state C).

As illustrated in Fig. 4, the state of the UE 100 is the state A when no communication is started yet, e.g., immediately after the UE 100 is turned on, then transitions to the state C for a moment and then transitions to the state B. After communications are over, the state transitions from the state B back to the state A without transitioning to the state C.

In this embodiment, in particular, the state control unit 107 causes the UE 100 to transition from RRC-IDLE state and EMM-IDLE state (state A) to RRC-CONNECTED state and EMM-IDLE state (state C) and keep the state C. Note that, because the state C is a state where a connection in the RRC layer is established, a communication bearer in the control plane is available in this state; on the other hand, because the state C includes EMM-IDLE state, a communication bearer in the user plane is unavailable in this state.

In this embodiment, in the state C, i.e., in RRC_Connected SDT state, the state control unit 107 causes the transmission/reception unit 101 to transmit small-size data outputted from the equipment connected to the UE 100 (user data) via a communication bearer in the control plane. In other words, the UE 100 does not establish a Non-Access Stratum (NAS) Connection with the MME 30 when executing SDT. Usually, a communication bearer in the control plane is used to transmit/receive not user data but control data only. However, in this embodiment, small-size data outputted from the equipment connected to the UE 100 is transmitted via a communication bearer in the control plane.

In addition, the state control unit 107 transmits a packet (first IP packet) via a communication bearer in the control plane to the eNB 20 with which the communication bearer is established, the packet being for establishing a communication bearer between the eNB 20 and the SGW 40/PGW 50.

### (2.2) Gateway Device

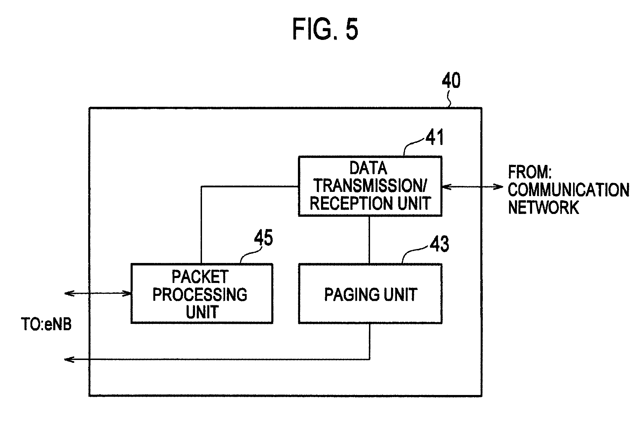

Fig. 5 is a functional block configuration diagram of the SGW 40. As illustrated in Fig. 5, the SGW 40 includes a data transmission/reception unit 41, a paging unit 43, and a packet processing unit 45. Note that the function of the SGW 40 may be performed by the PGW 50.

The data transmission/reception unit 41 is connected to the external communication network 10, and is configured to receive downlink data (packet) for the UE 100 from the communication network 10 and transmit uplink data (packet) to the communication network 10. In this embodiment, the data transmission/reception unit 41 constitutes a data reception unit.

The paging unit 43 is configured to transmit a page request for the UE 100 in response to an event that the data transmission/reception unit 41 has received downlink data for the UE 100. Specifically, the paging unit 43 transmits a page request to the eNB 20 via the MME 30 for example, the eNB 20 forming a cell on which the UE 100 camps.

The packet processing unit 45 is configured to perform processes of a downlink data packet for the UE 100 and of an uplink data packet transmitted from the UE 100 via the eNB 20. In this embodiment, in particular, the packet processing unit 45 is capable of receiving a packet from the eNB 20 with which the UE 100 establishes an RRC communication bearer, the packet including an identifier (F-TEID: Fully Qualified Tunnel Endpoint Identifier) for identifying the communication bearer. In response to the received packet, the packet processing unit 45 is also capable of sending the MME 30 a message (DDN Complete) indicating a reception acknowledgement of the packet and indicating that the UE 100 is enabled to perform communication in the user plane.

In addition, the packet processing unit 45 is capable of sending the eNB 20 an IP packet for requesting the eNB 20 to perform a Non-Access Stratum (NAS) service request, the eNB 20 forming a cell on which the UE 100 camps.

### (2.3) Radio Base Station

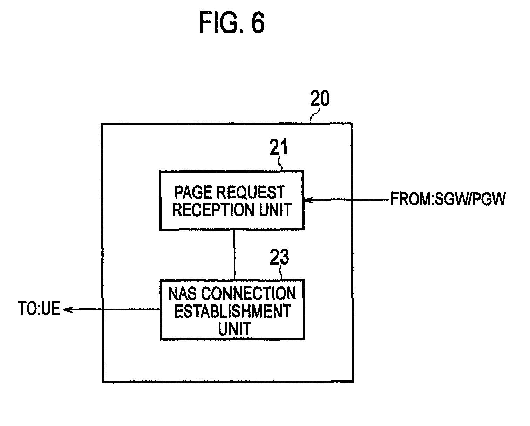

Fig. 6 is a functional block configuration diagram of the eNB 20. As illustrated in Fig. 6, the eNB 20 includes a page request reception unit 21 and a NAS connection establishment request unit 23.

The page request reception unit 21 is configured to receive a page request for the UE 100 from the SGW 40 (or the PGW 50).

The NAS connection establishment request unit 23 is configured to perform a NAS service request to the UE 100 in response to the page request received by the page request reception unit 21. Specifically, in response to the page request thus received, the NAS connection establishment request unit 23 sends the UE 100 an RRC layer message for causing the UE 100 to initiate a service request. Alternatively, in place of the RRC layer message, the NAS connection establishment request unit 23 may acquire a context from the MME 30, the context including information on paging (such as IMSI and DRX interval).

Further, the NAS connection establishment request unit 23 may autonomously judge if the UE 100 needs establishing a NAS Connection irrespective of whether there is a page request or not. For example, the NAS connection establishment request unit 23 may request the UE 100 to establish a NAS Connection when the UE 100 performs handover to another cell.

### (3) Operation of Mobile Communication System

Next, operations of the above mobile communication system 1 are described. Specifically, description is given of: an operation for the UE 100 to voluntarily perform SDT (operation example 1); an operation observed when there is an incoming call for the UE 100 while the UE performs SDT (operation example 2); and an operation for the network (gateway device) to direct the UE 100 to perform SDT (operation example 3).

### (3.1) Operation Example 1

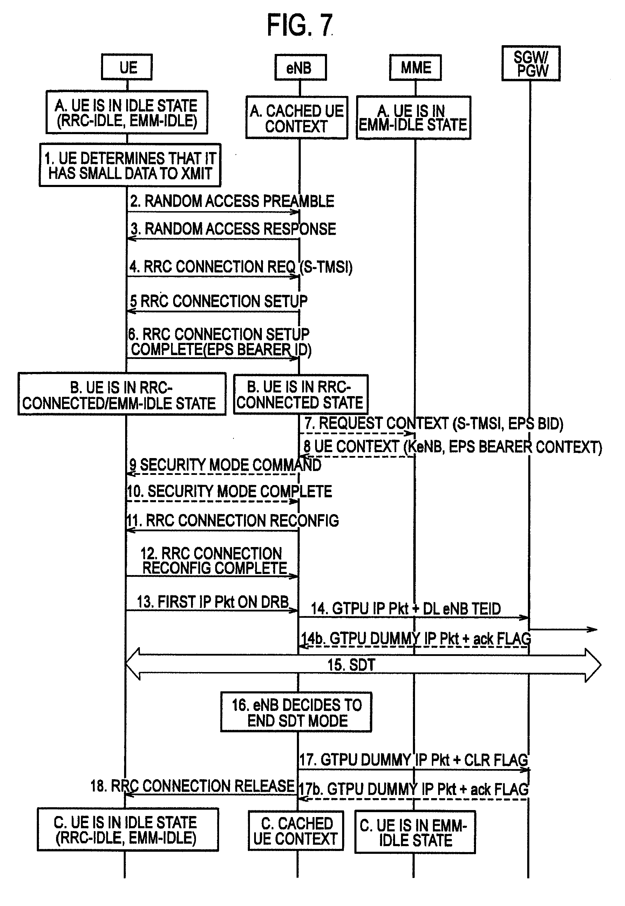

Fig. 7 illustrates a sequence in the mobile communication system 1 observed when the UE 100 voluntarily performs SDT. Note that description is given mainly of parts different from those of the SDT sequence based on the conventional communication procedure illustrated in Fig. 1.

As illustrated in Fig. 7, the UE 100 transmits RRC Connection Setup Complete via a Signaling Radio Bearer (SRB) 1 (Step 6). Here, in the RRC message, the UE 100 includes the ID of a communication bearer (EPS bearer) that the UE wishes to establish. Note that this message is protected (encrypted) by key-at-eNB (KeNB).

The eNB 20 having received the message checks whether or not a set of SAE Temporary Mobile Subscriber Identity (S-TMSI) and EPS-Bearer_ID is cached in the eNB 20 already and whether or not the integrity of this information is guaranteed. If the information is cached in the eNB 20 already and its integrity is guaranteed, the eNB 20 skips Steps 7 to 10.

On the other hand, if the information is not cached yet, or if the integrity of the information is not guaranteed, the eNB 20 acquires the information from the MME 30 (Steps 7 and 8). Specifically, the eNB 20 sends the MME 30 a Request Context message for requesting necessary S-TMSI and EPS-Bearer_ID. The MME 30 notifies the eNB 20 of KeNB and necessary EPS Bearer (between the UE and the eNB) context information. The MME 30 also notifies the eNB 20 of information necessary to page the UE 100 (such as IMSI and DRX interval).

In response to a packet (First IP packet) that the eNB 20 has received from the UE 100 via a communication bearer (DRB) established therebetween, the eNB 20 sends the SGW 40 a downlink eNB_Fully Qualified Tunnel Endpoint Identifier (F-TEID), i.e., F-TEID for the eNB 20 (Step 14). If there is a downlink packet, the SGW 40 having received this F-TEID transmits the packet via a communication bearer (EPS Bearer) identified by the F-TEID. The SGW 40 also sends the eNB 20 a dummy IP packet including ack-flag indicating a reception acknowledgment of the F-TEID (Step 14b).

SDT is performed via the communication bearer upon completion of the process in Step 14b (Step 15).

In order to delete the GTP-U tunnel for the specific TEID (between the eNB 20 and the SGW 40), the eNB 20 sends the SGW 40 a clear flag for requesting its deletion (Step 17). After deleting the GTP-U tunnel, the SGW 40 sends the eNB 20 a dummy IP packet including ack-flag (Step 17b). With the above operation, the UE 100 transitions back to IDLE state (RRC-IDLE state and EMM-IDLE state) once it finishes executing necessary SDT.

### (3.2) Operation Example 2

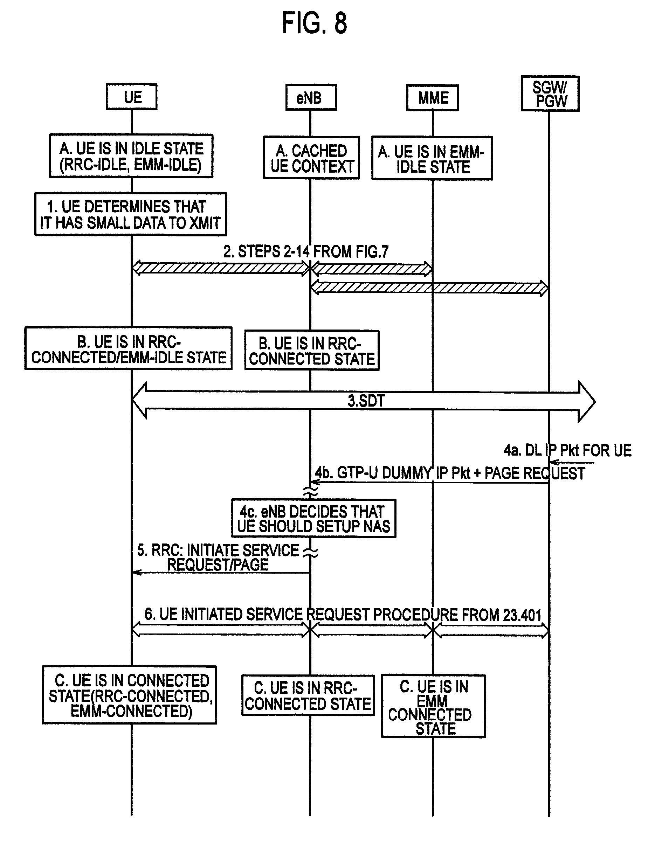

Fig. 8 illustrates a sequence in the mobile communication system 1 observed when there is an incoming call for the UE 100 while the UE performs SDT. Note that, as in the above case, description is given mainly of parts different from those of the SDT sequence based on the conventional communication procedure illustrated in Fig. 1.

As illustrated in Fig. 8, the UE 100 performs the processes of Steps 2 to 14 illustrated in Fig. 7 (Step 2) and performs SDT (Step 3). Note that block arrows with diagonal lines in Fig. 8 each mean that a communication bearer (communication bearer in the control plane) is established between the corresponding devices. Note that, in this phase, a communication path (bearer) for SDT is secured by the process in Step 2 but, if there is a usual incoming call for the UE 100, a communication bearer for accepting the incoming call is not secured yet. The following operation is performed if there is a usual incoming call which is not SDT.

There is a usual incoming call for the UE 100, and a downlink packet arrives at the SGW 40 (Step 4a). Via a communication bearer (S1-U bearer) already established between the eNB 20 and the SGW 40, the SGW 40 sends the eNB 20 a GTP-U header including a dummy IP packet with a flag to prompt the eNB 20 for a page request (Step 4b). The flag means that the eNB 20 initiates paging of the UE 100 and the UE 100 initiates a usual NAS service request based on the paging.

Alternatively, another conceivable case is that the eNB 20 autonomously directs the UE 100 to establish a NAS Connection instead of the process in Step 4b (Step 4c). For example, when the UE 100 performs handover to another cell, the eNB 20 detects this handover and thus may direct the UE 100 to establish a NAS Connection with this detection as a trigger. More specifically, since the movement of the UE 100 to another cell is notified to the eNB 20, the eNB 20 may direct the UE 100 to establish a NAS Connection with this notification as a trigger.

Next, after the process in Step 4b or 4c, the eNB 20 sends the UE 100 paging information and an RRC message for causing the UE 100 to perform a service request (Step 5). Note that the eNB 20 may acquire a context necessary for KeNB and EPS Bearer (between the UE and the eNB) by sending the MME 30 Request Context as in Step 7 illustrated in Fig. 7.

As a result, the UE 100 performs a service request in the usual incoming call in compliance with 3GPP TS23.401 and the like, and a communication bearer (communication bearer in the user plane) is established among the UE 100, the eNB 20, the MME 30, and the SGW 40.

### (3.3) Operation Example 3

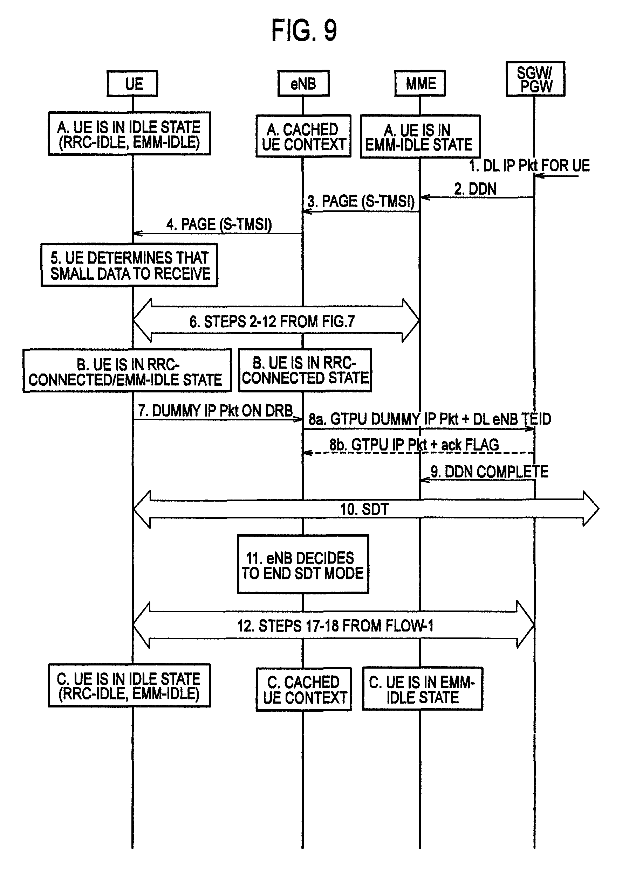

Fig. 9 illustrates a sequence in the mobile communication system 1 observed when the network (gateway device) directs the UE 100 to perform SDT. Note that, as in the above case, description is given mainly of parts different from those of the SDT sequence based on the conventional communication procedure illustrated in Fig. 1.

In this operation example, an S1-U bearer for SDT has not been established yet. Thus, once a downlink packet for the UE 100 arrives, the SGW 40 transmits Downlink Data Notification (DDN) to the MME 30 (Steps 1 and 2). According to a tracking area that the UE 100 belongs to, the MME 30 having received the DDN transmits a page request to the corresponding eNB 20 (Step 3). This paging includes SAE-Temporary Mobile Subscriber Identity (S-TMSI) of the UE 100. The eNB 20 pages the UE 100 in response to the page request received from the MME 30. The UE 100 is prompted to perform SDT by such an operation on the network side.

The UE 100 thus paged decides to perform SDT at this point (Step 5). The UE 100 performs the processes in Steps 2 to 12 illustrated in Fig. 7 (Step 6) to establish an RRC connection between the UE 100 and the eNB 20. Because a bearer (tunnel) between the eNB 20 and the SGW 40 has not been defined yet at this point, the bearer is defined by the following procedure.

Based on a dummy IP packet received from the UE 100 via a communication bearer (DRB), the eNB 20 sends the SGW 40 a dummy IP packet including downlink DL_eNB_F-TEID (Step 8a). The SGW 40 having received the IP packet is now able to transfer a downlink IP packet to the eNB 20 via a communication bearer specified by the F-TEID. In a downlink IP packet that the SGW 40 transmits to the eNB 20 first, the SGW 40 includes ack flag indicating a reception acknowledgment of the F-TEID. In other words, the ack flag means that a communication bearer (tunnel) has been defined between the eNB 20 and the SGW 40.

The SGW 40 transmits DDN Complete to the MME 30 (Step 9). The transmission of DDN Complete to the MME 30 can make the MME 30 aware of the fact that the UE 100 has responded the paging and that the S1-U communication bearer (between the eNB 20 and the SGW 40) in the user plane has been established.

### (4) Effects and Advantages

According to the mobile communication system 1 described above, when the UE 100 is in RRC-CONNECTED state and EMM-IDLE state, user data inputted into the UE 100 is transmitted via a communication bearer in the control plane. In addition, as soon as the transmission of the user data is completed, the UE 100 transitions from RRC-CONNECTED state and EMM-IDLE state to RRC-IDLE state and EMM-IDLE state. For this reason, no communication bearer in the user plane needs to be established and therefore transmission/reception of control signals along with the establishment of the communication bearer in this plane is no longer necessary. Thus, according to the mobile communication system 1, it is possible to reduce particularly the number of control signals to the MME 30 to a large extent and efficiently perform transmission of small-size data such as SDT, so that network resources can be used effectively.

More specifically, the UE 100 establishes no NAS Connection with the MME 30 while executing SDT. Hence, the UE 100 remains in EMM-IDLE state while executing SDT. Because the eNB 20 has an Access Stratum (AS) context of the UE 100, the eNB has no need to request the context to the MME 30 for executing SDT when the UE 100 is in EMM-IDLE state.

Further, signaling from the MME 30 to the SGW 40 is no longer necessary (Steps 14, 15, 22, and 23 of Fig. 1 are no longer necessary). Specifically, the eNB 20 transmits necessary information (DL eNB F-TEID) to the SGW 40 directly when the UE 100 turns from IDLE state to RRC-CONNECTED state, and requests the SGW 40 to delete the information when the UE 100 turns to IDLE state again (Step 17 of Fig. 7).

The sequence based on the conventional communication procedure (3GPP TS23.401, 36.300) illustrated in Fig. 1 is compared with the sequence based on the communication procedure according to this embodiment illustrated in Fig. 7. The number of signals (the number of messages) transmitted and received in the mobile communication system 1 is reduced from 14 (the conventional communication procedure) to 11 (the communication procedure according to this embodiment) (during a period while the UE 100 turns from IDLE state (RRC-IDLE state and EMM-IDLE state) to RRC-CONNECTED state), and is reduced from 6 (the conventional communication procedure) to 3 (the communication procedure according to this embodiment) (during a period while the UE 100 turns from RRC-CONNECTED state back to IDLE state) . In particular, the number of signals associated with the MME 30 is zero in the communication procedure according to this embodiment.

In this way, this embodiment enables SDT while using radio resources effectively.

Besides, according to the operation example 2 described above, even while the UE performs SDT, that is, the UE is in RRC-CONNECTED state and EMM-IDLE state, a page request for the UE 100 is transmitted to the eNB 20 forming a cell on which the UE 100 camps. Accordingly, even if there is an incoming call for the UE 100 while the UE performs SDT, the system according to the operation example 2 enables the UE 100 to respond to the incoming call.

Further, according to the operation example 3 described above, it is possible to cause the eNB 20 to perform a NAS service request to the UE 100 in response to a page request received from the SGW 40, and cause the UE 100 to perform SDT in response to the service request. Hence, the system according to the operation example 3 can realize SDT not under the initiative of the UE 100 but under the initiative of the network.

### (5) Other Embodiment

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

For example, in the embodiment of the present invention described above, signals (messages) are transmitted and received between the eNB 20 and the SGW 40. However, in place of the SGW 40, the PGW 50 may transmit and receive signals to and from the eNB 20.

While LTE has been exemplified to describe the above embodiment, the present invention is, of course, applicable to another radio access technology (such as 3G).

As described above, the present invention naturally includes various embodiments which are not described herein. Accordingly, the technical scope of the present invention should be determined only by the matters to define the invention in the scope of claims regarded as appropriate based on the description.

It should be noted that the present invention may be expressed as follows. A first feature of the present invention is summarized as a UE 100 (user device) including: an RRC unit 103 (radio resource control unit) configured to perform a process in a control plane according to radio resource control (RRC) ; and an EMM unit 105 (mobility management unit) configured to perform mobility management of the user device and enable a process in a user plane, the user device including: a state control unit 107 (state control unit) configured to cause the user device to transition from RRC-IDLE state where no communication bearer in the control plane is established, and EMM-IDLE state where communication in the user plane is not enabled, to RRC-CONNECTED state where a communication bearer in the control plane is established and the EMM-IDLE state; and a transmission/reception unit 101 (data transmission unit) configured to transmit user data inputted into the user device, via the communication bearer in the control plane in the RRC-CONNECTED state and the EMM-IDLE state. Here, the state control unit causes the user device to transition from the RRC-CONNECTED state and the EMM-IDLE state to the RRC-IDLE state and the EMM-IDLE state as soon as the transmission of the user data by the data transmission unit is completed.

In the first feature of the present invention, the state control unit may transmit a packet via the communication bearer in the control plane to an eNB 20 (radio base station) with which the communication bearer is established, the packet being for establishing a communication bearer between the eNB 20 and an SGW 40 (gateway device).

In the first feature of the present invention, the user data may be small-size data outputted from equipment connected to the user device.

A second feature of the present invention is summarized as an SGW 40 (gateway device) including a packet processing unit 45 (packet processing unit) configured to receive a packet from an eNB 20 (radio base station) with which a UE 100 (user device) establishes a communication bearer according to radio resource control (RRC), the packet including an identifier for identifying the communication bearer, and to send an MME 30 (mobility management device) a message in response to the received packet, the message indicating a reception acknowledgement of the packet and indicating that the user device is enabled to perform communication in a user plane.

In the second feature of the present invention, the gateway device may further include a data transmission/reception unit 41 (data reception unit) configured to receive downlink data for the user device from an external communication network 10 (communication network), and a paging unit 43 (paging unit) configured to send a page request for the user device to an eNB 20 (radio base station) forming a cell on which the user device camps, in response to the reception of the downlink data by the data reception unit. Here, the packet processing unit may send the eNB 20 (radio base station) forming the cell on which the user device camps, an IP packet requesting the radio base station to perform a non-access stratum service request.

A third feature of the present invention is summarized as a radio base station including: a page request reception unit 21 (page request reception unit) configured to receive a page request for a UE 100 (user device) from an SGW 40 (gateway device) connected to an external communication network 10 (communication network); and a NAS connection establishment request unit 23 configured to perform a non-access stratum service request to the user device in response to the page request received by the page request reception unit.

A fourth feature of the present invention is summarized as a mobile communication system including: a user device which includes a radio resource control unit configured to perform a process in a control plane according to radio resource control, and a mobility management unit configured to perform mobility management of the user device and enable a process in a user plane; and a gateway device connected to an external communication network. Here, the user device includes: a state control unit configured to cause the user device to transition from RRC-IDLE state where no communication bearer in the control plane is established, and EMM-IDLE state where communication in the user plane is not enabled, to RRC-CONNECTED state where a communication bearer in the control plane is established, and the EMM-IDLE state; and a data transmission unit configured to transmit user data inputted into the user device, via the communication bearer in the control plane in the RRC-CONNECTED state and the EMM-IDLE state, the state control unit causes the user device to transition from the RRC-CONNECTED state and the EMM-IDLE state to the RRC-IDLE state and the EMM-IDLE state as soon as the transmission of the user data by the data transmission unit is completed, and transmits a packet via the communication bearer in the control plane to the radio base station with which the communication bearer is established, the packet being for establishing a communication bearer between the radio base station and the gateway device, and the gateway device includes a packet processing unit configured to receive a packet from the radio base station, the packet including an identifier for identifying the communication bearer, and to send a mobility management device a message in response to the received packet, the message indicating a reception acknowledgment of the packet and indicating that the user device is enabled to perform communication in the user plane.

A fifth feature of the present invention is summarized as a mobile communication method using: a user device which includes a radio resource control unit configured to perform a process in a control plane according to radio resource control, and a mobility management unit configured to perform mobility management of the user device and enable a process in a user plane; and a gateway device connected to an external communication network, the method including the steps of: causing the user device to transition from RRC-IDLE state where no communication bearer in the control plane is established, and EMM-IDLE state where communication in the user plane is not enabled, to RRC-CONNECTED state where a communication bearer in the control plane is established, and the EMM-IDLE state; causing the user device to transmit user data inputted into the user device, via the communication bearer in the control plane in the RRC-CONNECTED state and the EMM-IDLE state; causing the user device to transmit a packet via the communication bearer in the control plane to the radio base station with which the communication bearer is established, the packet being for establishing a communication bearer between the radio base station and the gateway device; causing the gateway device to receive a packet from the radio base station, the packet including an identifier for identifying the communication bearer, and to send a mobility management device a message in response to the received packet, the message indicating a reception acknowledgment of the packet and indicating that the user device is enabled to perform communication in the user plane; and causing the user device to transition from the RRC-CONNECTED state and the EMM-IDLE state to the RRC-IDLE state and the EMM-IDLE state as soon as the transmission of the user data inputted into the user device is completed.

Note that the entire content of Japanese Patent Application No. 2013-011533 (filed on January 24, 2013) is incorporated by reference in the present specification.

### INDUSTRIAL APPLICABILITY

According to the above features, it is possible to provide a user device, a gateway device, a radio base station, a mobile communication system, and a mobile communication method capable of considerably reducing the number of control signals necessary for Small Data Transmission (SDT).

### EXPLANATION OF THE REFERENCE NUMERALS

- 1: mobile communication system
- 10: communication network
- 20: eNB
- 21: page request reception unit
- 23: NAS connection establishment request unit
- 30: MME
- 40: SGW
- 41: data transmission/reception unit
- 43: paging unit
- 45: packet processing unit
- 50: PGW
- 100: UE
- 101: transmission/reception unit
- 103: RRC unit
- 105: EMM unit
- 107: state control unit

## Claims

1. A user device including: a radio resource control unit configured to perform a process in a control plane according to radio resource control; and a mobility management unit configured to perform mobility management of the user device and enable a process in a user plane, the user device comprising:
a state control unit configured to cause the user device to transition from RRC-IDLE state where no communication bearer in the control plane is established, and EMM-IDLE state where communication in the user plane is not enabled, to RRC-CONNECTED state where a communication bearer in the control plane is established and the EMM-IDLE state; and
a data transmission unit configured to transmit user data inputted into the user device, via the communication bearer in the control plane in the RRC-CONNECTED state and the EMM-IDLE state, wherein
the state control unit causes the user device to transition from the RRC-CONNECTED state and the EMM-IDLE state to the RRC-IDLE state and the EMM-IDLE state as soon as the transmission of the user data by the data transmission unit is completed.

2. The user device according to claim 1, wherein the state control unit transmits a packet via the communication bearer in the control plane to a radio base station with which the communication bearer is established, the packet being for establishing a communication bearer between the radio base station and a gateway device.

3. The user device according to claim 1, wherein the user data is small-size data outputted from equipment connected to the user device.

4. A gateway device comprising a packet processing unit configured to receive a packet from a radio base station with which a user device establishes a communication bearer according to radio resource control, the packet including an identifier for identifying the communication bearer, and to send a mobility management device a message in response to the received packet, the message indicating a reception acknowledgement of the packet and indicating that the user device is enabled to perform communication in a user plane.

5. The gateway device according to claim 4, further comprising
a data reception unit configured to receive downlink data for the user device from an external communication network, and
a paging unit configured to send a page request for the user device to a radio base station forming a cell on which the user device camps, in response to the reception of the downlink data by the data reception unit, wherein
the packet processing unit sends the radio base station forming the cell on which the user device camps, an IP packet requesting the radio base station to perform a non-access stratum service request.

6. A radio base station comprising:
a page request reception unit configured to receive a page request for a user device from a gateway device connected to an external communication network; and
a NAS connection establishment unit configured to perform a non-access stratum service request to the user device in response to the page request received by the page request reception unit.

7. A mobile communication system including:
a user device which includes a radio resource control unit configured to perform a process in a control plane according to radio resource control, and a mobility management unit configured to perform mobility management of the user device and enable a process in a user plane; and
a gateway device connected to an external communication network, wherein
the user device comprises:
a state control unit configured to cause the user device to transition from RRC-IDLE state where no communication bearer in the control plane is established, and EMM-IDLE state where communication in the user plane is not enabled, to RRC-CONNECTED state where a communication bearer in the control plane is established, and the EMM-IDLE state; and
a data transmission unit configured to transmit user data inputted into the user device, via the communication bearer in the control plane in the RRC-CONNECTED state and the EMM-IDLE state,
the state control unit
causes the user device to transition from the RRC-CONNECTED state and the EMM-IDLE state to the RRC-IDLE state and the EMM-IDLE state as soon as the transmission of the user data by the data transmission unit is completed, and
transmits a packet via the communication bearer in the control plane to the radio base station with which the communication bearer is established, the packet being for establishing a communication bearer between the radio base station and the gateway device, and
the gateway device comprises a packet processing unit configured to receive a packet from the radio base station, the packet including an identifier for identifying the communication bearer, and to send a mobility management device a message in response to the received packet, the message indicating a reception acknowledgment of the packet and indicating that the user device is enabled to perform communication in the user plane.

8. A mobile communication method using:
a user device which includes a radio resource control unit configured to perform a process in a control plane according to radio resource control, and a mobility management unit configured to perform mobility management of the user device and enable a process in a user plane; and
a gateway device connected to an external communication network, the method comprising the steps of:
causing the user device to transition from RRC-IDLE state where no communication bearer in the control plane is established, and EMM-IDLE state where communication in the user plane is not enabled, to RRC-CONNECTED state where a communication bearer in the control plane is established, and the EMM-IDLE state;
causing the user device to transmit user data inputted into the user device, via the communication bearer in the control plane in the RRC-CONNECTED state and the EMM-IDLE state;
causing the user device to transmit a packet via the communication bearer in the control plane to the radio base station with which the communication bearer is established, the packet being for establishing a communication bearer between the radio base station and the gateway device;
causing the gateway device to receive a packet from the radio base station, the packet including an identifier for identifying the communication bearer, and to send a mobility management device a message in response to the received packet, the message indicating a reception acknowledgment of the packet and indicating that the user device is enabled to perform communication in the user plane; and
causing the user device to transition from the RRC-CONNECTED state and the EMM-IDLE state to the RRC-IDLE state and the EMM-IDLE state as soon as the transmission of the user data inputted into the user device is completed.
